(19) Europäisches Patentamt
European Patent Office
Office européen des brevets

(11) **EP 1 665 676 B1**

(12) **EUROPÄISCHE PATENTSCHRIFT**

(45) Veröffentlichungstag und Bekanntmachung des Hinweises auf die Patenterteilung:
**24.01.2007 Patentblatt 2007/04**

(21) Anmeldenummer: **04764196.4**

(22) Anmeldetag: **17.08.2004**

(51) Int Cl.:
*H04L 12/56* *(2006.01)*   *H04L 29/06* *(2006.01)*

(86) Internationale Anmeldenummer:
**PCT/EP2004/009206**

(87) Internationale Veröffentlichungsnummer:
**WO 2005/036833 (21.04.2005 Gazette 2005/16)**

(54) **VERFAHREN ZUR LASTSTEUERUNG IN EINEM PAKETDATENNETZ**

LOAD CONTROL METHOD IN A PACKET DATA NETWORK

PROCEDE DE REGULATION DE CHARGE DANS UN RESEAU DE DONNEES PAR PAQUETS

(84) Benannte Vertragsstaaten:
**DE GB IT**

(30) Priorität: **24.09.2003 DE 10344346**

(43) Veröffentlichungstag der Anmeldung:
**07.06.2006 Patentblatt 2006/23**

(73) Patentinhaber: **SIEMENS AKTIENGESELLSCHAFT 80333 München (DE)**

(72) Erfinder: **SCHÖPF, Johannes 82256 Fürstenfeldbruck (DE)**

(56) Entgegenhaltungen:
**EP-A- 1 300 995**   **US-A1- 2001 038 639**
**US-A1- 2002 099 842**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**EP 1 665 676 B1**

**Beschreibung**

Es wird ein Verfahren zur Laststeuerung in einem Paketdatennetz an einer Schnittstelle zwischen dem Paketdatennetz und einem damit verbundenen, verbindungsorientierten Telekommunikationsnetz, angegeben, bei dem eine Verkehrsmenge von Daten einer Art, die durch das Paketdatennetz geleitet wird, periodisch ermittelt wird. Weiterhin wird ein Media Gateway sowie ein Media Gateway Controller zur Durchführung des erfindungsgemäßen Verfahrens angegeben.

Ein Paketdatennetz für Sprachdatenübertragung besteht gewöhnlich aus mehreren untereinander verbundenen Vermittlungsknoten sowie mehreren Media Gateways, kurz MG, welche die Schnittstellen zu verbindungsorientierten Telekommunikationsnetzen und somit quasi die Endpunkte des Paketdatennetzes und bilden. Beispiele für verbindungsorientierte Telekommunikationsnetze sind Netze nach dem Standard für "Integrated Services Digital Network", kurz ISDN, oder nach dem Standard für "Public Switched Telephone Network", kurz PSTN. Dabei ist es unerheblich ob es sich um private oder öffentliche Netze handelt.

Die Media Gateways haben nun die Aufgabe, die Sprachströme in ein im jeweiligen Netz gebräuchliches Format zu konvertieren. Dabei werden verschiedene Kodierverfahren angewandt, etwa Verfahren nach dem Standard G.711 oder G.723. Die Media Gateways werden hierbei durch den Media Gateway Controller, kurz MGC, unterstützt, welcher die Aufgabe hat, das Umsetzen der Sprachströme durch die Media Gateways zu steuern. Diese sogenannte Bearer Control erfolgt dabei auf der Basis verschiedener Signalisierungs-Schnittstellen, beispielsweise ISUP, SIP oder H.323.

Zur Steuerung des Bearers kann zum Beispiel das MGCP Protokoll (RFC 2705) oder Megaco (H 248) benutzt werden. Es ist Aufgabe des Paketdatennetzes, die paketbasierten Sprachströme zwischen verschiedenen Media Gateways pro Ruf entsprechend den Anforderungen an einen Sprachdienst, beispielsweise hinsichtlich Bandbreite, Delay, Jitter, Paketverluste usw., zu übertragen. Aus Sicht der Sprachströme kann das zugrundelegende Netz-Szenario als ein mit virtuellen Trunks vermaschtes Netz von Media Gateways, die vom Media Gateway Controller gesteuert werden, beschrieben werden.

Für den Sprachdienst werden gegenüber anderen Verkehrsströmen, etwa beim Transfer von Dateien, im Paketdatennetz erhebliche schärfere Anforderungen an die garantierte Bereitstellung ausreichender Bandbreite, geringem Delay, geringem Paket-Jitter und Datenverlust gestellt. Diese Anforderungen werden unter dem Begriff "Quality of Service", kurz QoS, zusammengefasst.

Besonders für den Fall, dass mehrere Arten von Daten gleichzeitig im Paketdatennetz übertragen werden und das Paketdatennetz nicht für alle Arten überdimensioniert werden kann, ist eine geeignete Priorisierung der Sprachpakete und Überprüfung der nötigen Ressourcen des Paketdatennetzes vor dem Rufaufbau sinnvoll, insbesondere dann, wenn neben dem Sprachdienst noch andere wichtige Dienste abgewickelt werden müssen, deren Quality of Service ebenfalls zu gewährleisten ist.

Dazu ist es nötig, dass die Endgeräte des Netzes das Paketdatennetz durch eine sogenannte "Resource Reservation" darüber informieren, welche Ressourcen in welcher Verkehrsrichtung benötigt werden. Mit Hilfe der sogenannten "Admission Control" wird in Folge überprüft ob die Ressourcen des Paketdatennetzes ausreichen, um eine Sprachverbindung mit bestimmter Quality of Service gewährleisten zu können. Abhängig vom Ergebnis dieser Überprüfung wird der Ruf angenommen, abgewiesen oder der Ruf umgeleitet.

Die Admission Control wird nach dem Stand der Technik jeweils für einen Ruf ausgeführt. Dabei ergibt sich das Problem, dass die Einrichtungen des Datennetzes, welche die Resource Reservation und/oder die Admission Control übernehmen, dynamisch sehr stark belastet werden, da bei Sprachdiensten hierfür sehr viele, jedoch vergleichsweise kleine Datensätze erzeugt und gegebenenfalls transferiert werden.

Es ist daher die Aufgabe der Erfindung eine Laststeuerung in einem Paketdatennetz anzugeben, bei dem die Einrichtungen des Datennetzes, welche die Resource Reservation und/oder die Admission Control übernehmen, weniger belastet werden.

Dies erfolgt mit einem Verfahren der eingangs genannten Art (zum beispiel US 2002/099842),

- bei dem anhand der Messdaten eine prognostizierte Verkehrsmenge für die nächste Periode errechnet wird und
- bei dem für die nächste Periode eine der prognostizierten Verkehrsmenge entsprechende Reservierung von Ressourcen im Paketdatennetz durchgeführt wird.

Das erfindungsgemäße Verfahren eignet sich dabei beispielsweise für Sprachverbindungen, welche durch paketvermittelnde Telekommunikationsnetze geschaltet werden. Diese Technologie ist auch unter dem Begriff Voice over IP, kurz VoIP, bekannt. Gleichermaßen eignet sie sich aber auch für andere Datenströme, etwa Video oder Musik, bei denen eine Verkehrssteuerung für multiple Verkehrströme durch ein Paketdatennetz an den Endpunkten des Paketdatennetzes vorhanden ist. Weitere Varianten ergeben sich aus den Unteransprüchen sowie aus dem Ausführungsbeispiel.

Ein wesentlicher Vorteil der Erfindung liegt darin, dass Probleme auf den Einrichtungen des Paketdatennetzes hinsichtlich der Leistungsfähigkeit, welche für die Zugangskontrolle zuständig sind, vermieden werden. Weiterhin bleiben die Systemarchitektur sowie bereits vorhandene Prozesse in den beteiligten Komponenten weitgehend unverändert. Die praktische Realisierung des erfindungsgemäßen Verfahrens kann also auf vergleichsweise einfache Weise erfolgen.

Günstig ist es dabei, wenn bei einem Ansteigen/Sinken der Verkehrsmenge während einer Messperiode die Reservierung von Ressourcen des Paketdatennetzes pro Verkehrsrichtung für die folgende Messperiode ausgeweitet/ eingeschränkt wird.

Dabei wird auf Veränderungen hinsichtlich der Verkehrsmenge beziehungsweise dem Datendurchsatz dahingehend reagiert, dass bei einem Ansteigen des Durchsatzes mehr Ressourcen des Paketdatennetzes belegt werden und umgekehrt, um dem festgestellten Trend Rechnung zu tragen. Dies ist ein besonders einfach umzusetzender Regelalgorithmus für das erfindungsgemäße Verfahren.

Günstig ist weiterhin ein Verfahren, bei dem die Verkehrsmenge der während einer Messperiode übermittelten Datenmenge entspricht.

Bei dieser Variante wird das Integral des Datendurchsatzes über die gesamte Messperiode gebildet. Das Ergebnis entspricht der während der gesamten Messperiode transferierten Datenmenge. Wird diese Datenmenge durch die Messperiode dividiert, erhält man den durchschnittlichen Datendurchsatz.

Besonders vorteilhaft ist es, wenn die prognostizierte Verkehrsmenge anhand der Formel:

$$VMP(t+T) = VM(t) \cdot \ddot{U}F + (VM(t) - VM(t-T)) \cdot TF$$

ermittelt wird, wobei t einer Zeit, T einer Messperiode, VM(t) einer aktuellen Verkehrsmenge zum Zeitpunkt t, VM(t-T) einer vorhergehenden Verkehrsmenge zum Zeitpunkt t-T, VMP(t+T) einer prognostizierten Verkehrsmenge für den Zeitpunkt t+T, ÜF einem Überbuchungsfaktor und TF einem Trendfaktor entspricht.

Die prognostizierte Verkehrsmenge VMP(t+T) entspricht dabei der aggregierten Bandbreite beziehungsweise dem Durchsatz, die/der von der Resource Reservation Funktion des Paketdatennetzes für die nächste Messperiode T anzufordern ist. Dieser wird für jede Verkehrsbeziehung, also einem Weg, der durch das Paketdatennetz zu schalten ist, und jede Rufrichtung, also abhängig davon ob es sich um eingehende oder ausgehende Rufe handelt, festgelegt.

Mit dem Überbuchungsfaktor ÜF wird eine gewisse Sicherheit gegen die Ungenauigkeit des Algorithmus hinsichtlich der Prognose und unvorhergesehene Verkehrsschwankungen festgelegt. Wird keine Überbuchung gewünscht, so ist der Faktor auf 1 zu setzen, für eine zum Beispiel 20%ige Überbuchung ist der Faktor auf 1,2 zu setzen.

Mit dem Trendfaktor TF wird angegeben, wie schnell auf Änderungen von einer zur nächsten Messperiode reagiert werden soll. Er kann aufgrund individueller Strategien, zum Beispiel tageszeitabhängig, angepasst werden. Setzt man ihn auf 0, so wird nur die vorhergehende Verkehrsmenge VM(t) für die Berechnung der prognostizierten Verkehrsmenge VMP(t+T) herangezogen.

Es wird an dieser Stelle angemerkt, dass die Berechnung der prognostizierten Verkehrsmenge auch mit Messwerten erfolgen kann, die zu anderen Zeitpunkten ermittelt wurden. So kann der Überbuchungsanteil VM(t) · ÜF beispielsweise auch für den Zeitpunkt t-T oder t-2T berechnet werden, sodass sich für den Überbuchungsanteil VM(t-T) · ÜF oder VM(t-2T) · ÜF ergibt. Gleiches gilt natürlich auch für den Trendanteil, wobei die beiden Messpunkte hier zusätzlich zeitlich weiter auseinander liegen können, beispielsweise 2T. Hierbei ergibt sich für den Trendanteil etwa (VM(t)-VM(t-2T)) · TF.

Eine besonders vorteilhafte Ausgestaltung der Erfindung ist auch mit einem Verfahren gegeben, bei dem für die Ermittlung der prognostizierten Verkehrsmenge berücksichtigt wird, in welchem Ausmaß eine geforderte Übertragungsqualität durch das Paketdatennetz in einer Periode erfüllt werden konnte.

Dabei wird ausgewertet ob das Datennetz tatsächlich wie erwartet in der Lage war, die prognostizierte Verkehrsmenge in der geforderten Qualität zu übertragen. Trifft dies nicht zu, so wird die prognostizierte Verkehrsmenge für die folgende Messperiode entsprechend angepasst.

Günstig ist es dabei, wenn bei einem Ansteigen/Sinken der Übertragungskapazität des Paketdatennetzes prognostizierten Verkehrsmenge von einer Messperiode zur nächsten erhöht/gesenkt wird.

Dies ist eine besonders einfach umzusetzende Variante für eine erfindungsgemäße Laststeuerung. Wird beispielsweise festgestellt, dass das Datennetz nicht wie erwartet in der Lage war, die prognostizierte Verkehrsmenge in der geforderten Qualität zu übertragen, so wird die prognostizierte Verkehrsmenge für die folgende Messperiode entsprechend angepasst, das heißt gesenkt.

Eine besonders vorteilhafte Variante der Erfindung ist weiterhin mit einem Verfahren gegeben,

- bei dem als Schnittstelle zwischen dem Paketdatennetz und dem damit verbundenen, verbindungsorientierten Telekommunikationsnetz Media Gateways vorgesehen sind,
- bei dem für die Steuerung der Media Gateways ein Media Gateway Controller vorgesehen ist und

- bei dem die prognostizierten Verkehrsmengen für je eine Verkehrsrichtung vom Media Gateway Controller ermittelt und zur Reservierung von Ressourcen im Paketdatennetz an die Media Gateways verteilt werden.

Die Zugangskontrolle oder Admission Control wird für Paketdatennetze, welche auf einer Architektur nach dem Standard des Multi Service Switching Forum, kurz MSF, beruhen nach dem Stand der Technik jeweils für einen Ruf ausgeführt. Durch die Abkehr von einer Aggregation von Anforderungen von Ressourcen im Paketdatennetz und der Verwendung von Aggregationsfunktionen, die Verkehrsmessungen von Vermittlungseinrichtungen auswerten, werden die Resource Reservation und/oder die Admission Control entlastet. Vorteilhaft ist dabei auch, dass die vermittlungstechnischen Abläufe eines Call Feature Servers, eines Media Gateway Controllers oder eines Softswitches nicht betroffen sind. Es werden hierzu lediglich die prognostizierten Verkehrsmengen für je eine Verkehrsrichtung vom Media Gateway Controller ermittelt und zur Reservierung von Ressourcen im Paketdatennetz an die Media Gateways verteilt.

Vorteilhaft ist es dabei, wenn für die Ermittlung des Datendurchsatzes eine in einem Media Gateway Controller oder in einem Call Feature Server geführte, Bündel-orientierte Rufstatistik oder Verkehrsmatrix herangezogen wird.

Hierbei werden die Anforderungen von Ressourcen in den Endgeräten des Paketdatennetzes aggregiert, beispielsweise in einem Media Gateway Controller, einem Call Feature Server oder einem Softswitch. Dabei sollen die in diesen Elementen ohnehin geführten Trunk- oder Bündel-orientierte Rufstatistiken in das erfindungsgemäße Verfahren eingebunden werden. Eine Realisierung kann daher auf besonders einfache Weise erfolgen.

Die Aufgabe der Erfindung wird auch mit einem Media Gateway Controller gelöst, welcher Mittel zur Berechnung prognostizierten Verkehrsmengen für je eine Verkehrsrichtung sowie Mittel zum Verteilen dieser prognostizierten Verkehrsmengen an die Media Gateways umfasst.

Die beim erfindungsgemäßen Verfahren genannten Vorteile gelten selbstverständlich auch gleichermaßen für den erfindungsgemäßen Media Gateway Controller.

Schließlich wird die Aufgabe der Erfindung auch durch ein Media Gateway gelöst, welches Mittel zum Empfang einer prognostizierten Verkehrsmenge sowie Mittel zur Reservierung von der prognostizierten Verkehrsmenge entsprechenden Ressourcen im Paketdatennetz umfasst.

Die beim erfindungsgemäßen Verfahren genannten Vorteile gelten auch hier selbstverständlich gleichermaßen für das erfindungsgemäßen Media Gateway.

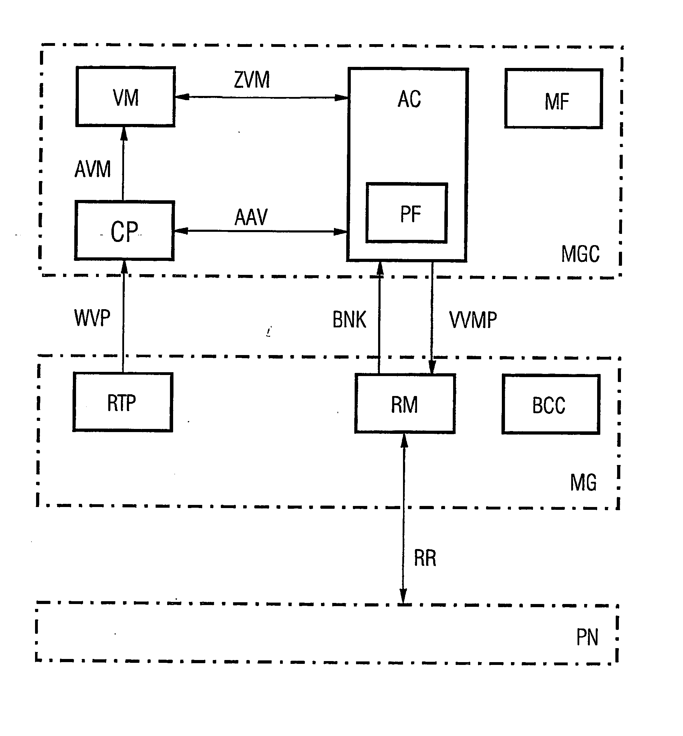

Die Erfindung wird nun anhand eines in der Figur dargestellten Ausführungsbeispiels, welches die Laststeuerung in einem IP-Paketdatennetz betrifft, näher erläutert.

Obwohl sich die Erfindung auf verschiedenste Technologien in Bezug auf ein Paketdatennetz PN bezieht, wird im folgenden Beispiel insbesondere von einem mit IP-Routern aufgebauten Paketdatennetz PN ausgegangen. Das erfindungsgemäße Verfahren kann dabei für verschiedenste Resource Reservation und Admission Control Protokolle eingesetzt werden. Im folgenden wird von einem Resource Reservation Protocol, kurz RSVP, nach den Standards RFC 2205 und 2208 ausgegangen. Denkbar wären aber auch proprietäre Schnittstellen, die denselben Zweck erfüllen. Idealerweise existiert zwischen der Steuereinrichtung des Paketdatennetzes PN und dem Paketdatennetz PN selbst ein RSVP-ähnliches Reservierungs- und Admission Control Protokoll. Diese Fälle umfassen beispielsweise:

- Intserv basierte Paketdatennetze (RFC 2210 und 2212)
- Diffserv basierte Paketdatennetze mit zentralen oder dezentralen Resource/Bandwidth Brokern (RFC 2474 und 2475)
- MPLS (RFC 3031) basierte Paketdatennetze sofern sie mit Resource Reservation bzw. Admission Control am Paketdatennetz-Endpunkt arbeiten
- Kombinationen aus Intserv und Diffserv Paketdatennetzen

Die Figur umfasst nun folgende funktionale Blöcke:

RTP-Messung RTP: Dieses Element ist im gezeigten Beispiel auf den Media Gateways MG implementiert und misst während des Rufs Parameter, welche hinsichtlich der Quality of Service relevant sind, insbesondere die Bandbreite, und übermittelt diese am Rufende dem Media Gateway Controller MGC. Die Messung der Bandbreiten beziehungsweise Verkehrsvolumina sowie weiterer QoS-relevanter Parameter ist im Real Time Protokoll (RTP - RFC 1889 und folgende) vorgesehen, welches in vielen Fällen zum Transport des Sprachstroms über Paketdatennetze verwendet.

Messungen bezüglich der Bandbreite können in einer einfachen Ausprägung aber auch durch eine Berechnung des von einem PSTN-Kanal erzeugten Paketstroms ersetzt werden. Dies erfolgt per Ruf unter Berücksichtigung der Paketisierungs-Periode und des verwendeten Encoding Protocols (zum Beispiel. G.723).

Es wird in diesem Zusammenhang darauf hingewiesen, dass in der Figur der Übersicht halber zwar nur ein einziges Media Gateway MG dargestellt ist, sich das erfindungsgemäße Verfahren aber selbstverständlich auch auf mehrere Media Gateways MG bezieht.

Bearer Control / Call Control BCC: Die Bearer Control / Call Control BCC ist Teil des Media Gateway MG und hat die Aufgabe, die QoS-relevanten Parameter mithilfe des MGCP oder des Megaco Protokolls an den Media Gateway Controller MGC weiterzureichen.

Statistiken und Verkehrsmatrizen VM: Diese sind eng an das Call Processing CP des Media Gateway Controllers MGC angebunden und werden per Ruf aktualisiert. Statistiken bezüglich eines Trunks sind meist nach ITU Standards implementiert. Die Achsen der Verkehrsmatrix VM werden von allen vom Media Gateway Controller MGC kontrollierten Endpunkten des Paketdatennetzes PN, welche den Media Gateways MG entsprechen, gebildet.

Sind für die Steuerung der Sprachströme eines Media Gateways MG mehrere Adressen im Paketdatennetz PN, beispielsweise IP-Adressen, nötig, sind sinngemäß Gruppen von Adressen für die Achsen zu verwenden. Die Elemente einer Verkehrsmatrix VM bestehen dabei aus je 2 Elementen, welche Verkehrsmesszählern für eine aktuelle als auch für eine vorhergehende Messperiode entsprechen. Ebenso können die Adressen mehrerer Media Gateways MG, welche an einem Endpunkt des Paketdatennetzes PN angeschlössen sind, zusammengefasst werden.

Verkehrsmengen sind in diesem Zusammenhang als eine geeignete Mittelung von übertragenen Volumina pro Zeiteinheit, zum Beispiel in Bits oder Bytes pro Sekunde, definiert. Dem physikalischen Sinn nach entspricht die Verkehrsmenge unabhängig von einer gebräuchlichen Definition daher einem Datendurchsatz.

Die Verkehrsmesszähler werden aufgrund von Bandbreiten beziehungsweise Verkehrsvolumina des Bearers (in beiden Richtungen unterschiedlich bei unsymmetrischen Anwendungen), die von den Media Gateways MG gemessen und bei Rufende an den Media Gateway Controller MGC gemeldet werden, geführt.

Die genannte Führung der Statistik kann vorteilhaft an die in Transit-Vermittlungsstellen üblichen Realzeit-Statistiken angebunden werden beziehungsweise diese erweitern. Diese Funktion kann aber auch als eigene, neue Statistik implementiert werden.

Prognosefunktion PF: Am Ende einer Messperiode werden die Verkehrsmesszähler beurteilt und ein Trend für die nächste Periode durch Vergleich mit der letzten Periode ermittelt. Dabei kann generell eine gewisse Überbuchung für das nächste Intervall berücksichtigt werden. Dadurch erreicht man, dass unerwartete Spitzen im Verkehr immer noch korrekt bearbeitet werden können. Entsprechend des Trends wird die Überbuchung erhöht oder erniedrigt. Ein Beispiel für eine solche Funktion wird im folgenden angegeben

$$\text{VMP(t+T)} = \text{VM(t)} \cdot \text{ÜF} + (\text{VM(t)} - \text{VM(t-T)}) \cdot \text{TF}$$

| t | Zeit |
|---|---|
| T | Messperiode |
| VM(t) | aktuelle Verkehrsmenge zum Zeitpunkt t |
| VM(t-T) | vorhergehende Verkehrsmenge zum Zeitpunkt t-T |
| VMP(t+T) | prognostizierte Verkehrsmenge für den Zeitpunkt t+T |
| ÜF | Überbuchungsfaktor |
| TF | Trendfaktor |

Die prognostizierte Verkehrsmenge VMP(t+T) entspricht dabei wie bereits erwähnt der aggregierten Bandbreite beziehungsweise dem Durchsatz, die/der von der Resource Reservation Funktion des Paketdatennetzes für die nächste Messperiode T anzufordern ist. Mit dem Überbuchungsfaktor ÜF wird eine gewisse Sicherheit gegen die Ungenauigkeit des Algorithmus hinsichtlich der Prognose und unvorhergesehene Verkehrsschwankungen festgelegt und mit dem Trendfaktor TF kann angegeben werden, wie schnell auf Änderungen von einer zur nächsten Messperiode reagiert werden soll.

Bei vergleichsweise großen Verkehrsströmen spielt es dabei keine große Rolle, dass die Periode der Statistikführung im Media Gateway Controller MGC und das Verteilen der neuen prognostizierten Verkehrsmenge VMP(t+T) durch die Resource Reservation RR, welche sich durch die Messperiode T ergibt, leicht versetzt sind. Denkbar ist auch, dass die Prognose Funktion PF Teil der Admission Control AC ist.

Mapping Funktion MF: Die Mapping Funktion MF bildet die virtuellen Ziele, beispielsweise Bündel, wie sie in einem Media Gateway Controller MGC, einem Call Feature Server oder einem Softswitch administriert sind, auf die Adressen der Endpunkte des Paketdatennetzes PN ab.

Reservation Manager RM: Die in einer bestimmten Verkehrsrichtung zu reservierende Verkehrsmenge wird am Beginn der neuen Messperiode vom Media Gateway Controller MGC an die Media Gateways MG verteilt, etwa als neues MGCP Paket in einer Benachrichtigung. Adressat dieser Verkehrsmengen Prognose ist der Reservation Manager RM, welcher eine Funktionseinheit im Media Gateway MG darstellt.

Der Reservation Manager RM hat unabhängig vom Call Processing CP des Media Gateway MG die Aufgabe, die entsprechende Reservation/Admission Control Schnittstelle des Paketdatennetzes PN zu bedienen.

Im Falle einer RSVP Schnittstelle werden zum Beispiel Refreshes auf Basis der Verkehrsmengen-Prognose so lange autonom durchgeführt, bis eine neue Verkehrs-Prognose vom Media Gateway Controller MGC eintrifft. Im Falle des RSVP werden die Protokollelemente in den Media Datenstrom des Media Gateway MG eingereiht. Es ist aber auch denkbar die RSVP Meldungen and einen sogenannten RSVP-Proxy an einen sogenannten "Edge Router" oder einen Resource/Bandwidth Controler des Paketdatennetzes zu senden.

Für weitere QoS-Parameter neben der Bandbreite/Verkehrsmenge, wie zum Beispiel Delay, Jitter usw., können für den Sprachdienst passende, fest administrierte Werte gesetzt werden.

Admission Control AC: Diese Funktion ist nötig, damit das Call Processing CP in Situationen, in denen das Paketdatennetz PN die Sprachqualität nicht mehr garantieren kann, Rufe abweist oder umlenkt.

Call Processing CP: Diese Funktion ist für die Steuerung eines Rufes zuständig.

Die Funktion der in der Figur dargestellten Anordnung ist wie folgt:

Verteilung der prognostizierten Verkehrsmengen VVMP: Von der Admission Control AC wird dem Reservation Manager RM am Anfang einer Messperiode die zu erwartende Verkehrsmenge beziehungsweise der Durchsatz pro Verkehrsrichtung, welche/welcher mit Hilfe der Prognose Funktion PF ermittelt wird, über eine Meldung mitgeteilt. Die wesentlichen, in dieser Meldung enthaltenen Parameter sind eine Liste aus:

- IP Zieladressen
- Verkehrsmengen in Senderichtung
- Verkehrsmengen in Empfangsrichtung

Reservierung der Ressourcen RR: Die genaue Festlegung dieser Parameter hängt vom verwendeten Paketdatennetz PN und dessen Verwaltungsmechanismen für die Ressourcen ab. Die Schnittstelle wird in der Regel aus Anforderungs-Meldungen des Reservation Manager RM an das Paketdatennetz PN und Antworten/Bestätigungen des Paketdatennetzes PN bestehen. Ein Beispiel für Parameter einer Anforderung sind:

- Eine Liste aus IP Zieladressen, und bei unsymmetrischer Belastung die Verkehrsmengen in Sende- und Empfangsrichtung
- QoS Parameter, die etwa für einen Sprachdienst einzuhalten sind. Das sind: maximaler Delay, maximaler Jitter, Verlustrate von IP Paketen sowie die Rate der nicht sequentiell übertragenen Parametern

Die Antwort/Bestätigung liefert eine

- Gut/Schlecht-Aussage
  und optional
- die tatsächlich vom Paketdatennetz PN zu erbringenden Ressourcen

Benachrichtigung über Netzkapazität BNK: Die Schnittstelle zwischen Reservation Manager RM und Admission Control AC wird für den Fall benutzt, dass das Paketdatennetz PN die aufgrund der prognostizierten Verkehrsmenge VMP(t+T) gestellten Anforderungen nicht erfüllen kann und anstatt die Forderung zu erfüllen eine Meldung an die Admission Control AC sendet, welche Verkehrsmenge bewältigt werden könnte. Diese Meldung sollte aus einer Liste mit zumindest den folgenden Parametern bestehen:

- Ziel IP Adresse
- Quell IP Adresse
- Verkehrsmenge, welche mit der durch die QoS-Parameter festgelegten Qualität in Senderichtung und bei unsymmetrischer Belastung in Empfangsrichtung übertragen werden kann. Die gewünschten, idealen (maximalen) QoS Parameter werden dabei vorteilhaft fest administriert.

Die Admission Control AC kann aber den Unterschied der prognostizierten Verkehrsmenge VMP(t+T) zur erfüllbaren Verkehrsmenge durch den Zugang auf die Verkehrsmatrix ZVM auch selbst feststellen und gegebenenfalls die Prognose aktualisieren.

Weitergabe der Verbindungsparameter WVP: Am Ende einer Verbindung werden folgende Parameter, welche jeweils für eine Verbindung angegeben werden, von der RTP-Messung RTP an das Call Processing CP weitergegeben:

- IP Zieladresse, das heißt die Adresse der gerufenen Seite
- IP Adresse des Media Gateways MG, die beim Ruf verwendet wurde, das heißt die der rufenden Seite
- Verkehrsmenge in Senderichtung und bei unsymmetrischer Belastung Verkehrsmenge in Empfangsrichtung
- Tatsächlich gemessene QoS Parameter, beispielsweise mit Hilfe des RTCP Protokolls

Die QOS Parameter können zu Statistikzwecken im Media Gateway Controller MGC gespeichert werden. Die Verkehrsmenge beziehungsweise der Durchsatz kann in Folge durch Teilung der Volumina und Rufdauern ermittelt werden.

Aktualisierung der Verkehrsmatrix AVM: Am Ende einer Verbindung werden die Statistikdaten und damit die Verkehrsmatrix VM vom Call Processing CP aktualisiert. Dazu sind folgende vom RTP-Measurement erhaltenen Parameter nötig:

- IP Adresse der gerufenen Seite
- IP Adresse der rufenden Seite
- Verkehrsmenge in Senderichtung und bei unsymmetrischer Belastung Verkehrsmenge in Empfangsrichtung

Anforderung für Aufbau einer Verbindung AAV: Vom Call Processing CP wird hierbei eine Anfrage an die Admission Control AC gestellt ob weitere Rufe aufgebaut werden können. Sie erfolgt im Rahmen der vermittlungstechnischen Abläufe zu einem Zeitpunkt, an dem das Call Processing CP die IP-Adresse des Quell- und Ziel-Media-Gateways MG über Signalisierungsprotokolle erhalten hat. Die Parameter sind:

- Ziel IP Adresse
- Quell IP Adresse
  und optional
- zu erwartende Verkehrsmenge in Senderichtung und bei unsymmetrischer Belastung Verkehrsmenge in Empfangsrichtung

Die Antwort besteht aus einer

- Aussage ob der Ruf möglich ist oder nicht

Die zu erwartende Verkehrsmenge sollte vom Call Processing CP aufgrund der verwendeten Codecs berechnet werden. Falls vereinbart wird, dass nur ein Codec Typ verwendet wird, kann der Parameter auch einfach administriert werden und muss nicht pro Ruf berechnet werden.

Zugang zur Verkehrsmatrix ZVM: Diese Schnittstelle zwischen Admission Control AC und Verkehrsmatrix VM wird benutzt, um Werte aus der Verkehrsmatrix VM zu lesen und zu aktualisieren. Der Schreib- und Lesezugriff auf jedes Element der Verkehrsmatrix VM muss dabei möglich sein.

Mit den genannten Komponenten kann nun ein Regelkreis aufgebaut werden, mit dem die Verkehrsanforderungen, welche in einem verbindungsorientierten Telekommunikationsnetz, etwa einem PSTN-Netz, entstehen, mit der Ressourcen Verwaltung des Paketdatennetzes PN abgestimmt werden.

Es resultiert dabei etwa ein Verfahren, bei dem bei einem Ansteigen/Sinken der Verkehrsmenge während einer Messperiode die Reservierung von Ressourcen des Paketdatennetzes PN pro Verkehrsrichtung für die folgende Messperiode durch einen Überbuchungsmechanismus ausgeweitet/eingeschränkt wird.

Zusätzlich kann bei einem Ansteigen/Sinken der Übertragungskapazität des Paketdatennetzes PN die Verkehrseinspeisung von einer Messperiode zur nächsten durch den Überbuchungsmechanismus erhöht/gesenkt werden.

Die Erfindung ist ohne Erweiterungen auch für den Fall anwendbar, dass mehrere Media Gateway Controller MGC oder Softswitche eine Vielzahl von Media Gateways MG des Paketdatennetzes PN steuern.

Erfolgt die Admission Control AC dezentral, wie etwa bei einem Intserv-Ansatz, so kann im Paketdatennetz PN keine Aggregation über mehrere Media Gateways MG erfolgen. Daher ist für jedes Media Gateway MG eine Aggregation der Anforderungen von Ressourcen durchzuführen. In diesem Fall ist keine topologische Information im Paketdatennetz PN enthalten, mit der eine weitere Aggregationen durchgeführt werden könnte.

Erfolgt die Admission Control AC zentral oder teilzentral, wie etwa bei einem Diffserv Ansatz mit einem Bandwidth Broker, so wird in aller Regel eine netzweite Verkehrsmatrix VM nötig sein, in der eine Übersicht über alle Media Gateways MG der Media Gateway Controller MGC verwaltet wird. Auch hier ist die Aggregation durch den MGC sinnvoll.

Das erfindungsgemäße Verfahren ist auch dann anwendbar, wenn anstelle des RSVP-Protokolls CORBA oder andere Schnittstellen verwendet werden. Da diese eventuell nicht auf einem Media Gateway MG verfügbar sind, sind technische Varianten denkbar, bei denen CORBA-Schnittstellen auf einem separaten Server realisiert werden.

Ebenso kann beispielsweise der Reservation Manager RM oder die Verkehrsmatrix VM mit der speziellen Statistik-Funktion auf separaten Server realisiert werden.

**Patentansprüche**

1. Verfahren zur Laststeuerung in einem Paketdatennetz (PN) an einer Schnittstelle zwischen dem Paketdatennetz (PN) und einem damit verbundenen, verbindungsorientierten Telekommunikationsnetz, wobei eine Verkehrsmenge von Daten einer Art, die durch das Paketdatennetz geleitet wird, periodisch ermittelt wird,
**dadurch gekennzeichnet,**

   - **dass** anhand der Messdaten eine prognostizierte Verkehrsmenge für die nächste Periode errechnet wird
   - **dass** für die nächste Periode eine der prognostizierten Verkehrsmenge entsprechende Reservierung von Ressourcen im Paketdatennetz (PN) durchgeführt wird und
   - **dass** die prognostizierte Verkehrsmenge anhand der Formel:

$$\mathtt{VMP(t+T)\ =\ VM(t)\ \cdot\ \ddot{U}F\ +\ (VM(t)-VM(t-T))\ \cdot\ TF}$$

   ermittelt wird, wobei t einer Zeit, T einer Messperiode, VM(t) einer aktuellen Verkehrsmenge zum Zeitpunkt t, VM(t-T) einer vorhergehenden Verkehrsmenge zum Zeitpunkt t-T, VMP(t+T) einer prognostizierten Verkehrsmenge für den Zeitpunkt t+T, ÜF einem Überbuchungsfaktor und TF einem Trendfaktor entspricht.

2. Verfahren nach Anspruch 1, **dadurch gekennzeichnet, dass** bei einem Ansteigen/Sinken der Verkehrsmenge während einer Messperiode die Reservierung von Ressourcen des Paketdatennetzes (PN) pro Verkehrsrichtung für die folgende Messperiode ausgeweitet/eingeschränkt wird.

3. Verfahren nach einem der Ansprüche 1 bis 2, **dadurch gekennzeichnet, dass** die Verkehrsmenge der während einer Messperiode übermittelten Datenmenge entspricht.

4. Verfahren nach einem der Ansprüche 1 bis 3, **dadurch gekennzeichnet, dass** für die Ermittlung der prognostizierten Verkehrsmenge berücksichtigt wird, in welchem Ausmaß eine geforderte Übertragungsqualität durch das Paketdatennetz (PN) in einer Periode erfüllt werden konnte.

5. Verfahren nach Anspruch 4, **dadurch gekennzeichnet, dass** bei einem Ansteigen/Sinken der Übertragungskapazität des Paketdatennetzes (PN) prognostizierten Verkehrsmenge von einer Messperiode zur nächsten erhöht/gesenkt wird.

6. Verfahren nach einem der Ansprüche 1 bis 5, **dadurch gekennzeichnet,**

   - **dass** als Schnittstelle zwischen dem Paketdatennetz (PN) und dem damit verbundenen, verbindungsorientierten Telekommunikationsnetz Media Gateways (MG) vorgesehen sind,
   - **dass** für die Steuerung der Media Gateways (MG) ein Media Gateway Controller (MGC) vorgesehen ist und
   - **dass** die prognostizierten Verkehrsmengen für je eine Verkehrsrichtung vom Media Gateway Controller (MGC) ermittelt und zur Reservierung von Ressourcen im Paketdatennetz an die Media Gateways (MG) verteilt werden.

7. Verfahren nach Anspruch 6, **dadurch gekennzeichnet, dass** für die Ermittlung des Datendurchsatzes eine in einem Media Gateway Controller (MGC) oder in einem Call Feature Server geführte, Bündel-orientierte Rufstatistik oder Verkehrsmatrix VM herangezogen wird.

8. Media Gateway Controller (MGC), zum durchführen des Verfahrens nach Anspruch 1 **dadurch gekennzeichnet, dass** dieser Mittel zur Berechnung prognostizierten Verkehrsmengen für je eine Verkehrsrichtung sowie Mittel zum Verteilen dieser prognostizierten Verkehrsmengen an die Media Gateways (MG) umfasst.

9. Media Gateway (MG), zum durchführen des Verfahrens nach Anspruch 1 **dadurch gekennzeichnet, dass** dieses Mittel zum Empfang einer prognostizierten Verkehrsmenge sowie Mittel zur Reservierung von der prognostizierten Verkehrsmenge entsprechenden Ressourcen im Paketdatennetz (PN) umfasst.

**Claims**

1. Method for controlling the load in a packet data network (PN) at an interface between the packet data network (PN) and a connection-oriented telecommunications network that is connected to said data network, in accordance with which a traffic volume of data of one type, which is routed through the packet network, is determined periodically, **characterized in that**,

    - the measured data is then used to calculate a predicted traffic volume for a next period
    - a subsequent reservation of resources, which corresponds to the predicted traffic volume, is carried out in the packet data network (PN) for said next period and
    - the predicted traffic volume is determined using the following formula:

$$VMP(t+T) = VM(t) \cdot ÜF + (VM(t)-VM(t-T)) \cdot TF$$

    in which case t corresponds to a time, T a measuring period, VM(t) a current traffic volume at the point in time t, VM(t-T) a preceding traffic volume at the point in time t-T, VMP(t+T) a predicted traffic volume for the point in time t+T, ÜF an overbooking factor and TF a trend factor.

2. Method in accordance with claim 1, **characterized in that** in the case of an increase/decrease in the traffic volume during a measuring period, the reservation of resources of the packet data network (PN) is expanded/restricted for each traffic direction for the next measuring period.

3. Method in accordance with one of the claims 1 to 2, **characterized in that** the traffic volume corresponds to the data volume transmitted during a measuring period.

4. Method in accordance with one of the claims 1 to 3, **characterized in that** to determine the predicted traffic volume the extent to which a requested transmission quality could be fulfilled by the packet data network (PN) in a period is taken into account.

5. Method in accordance with claim 4, **characterized in that** in the case of an increase/decrease in the transmission capacity of the packet data network (PN), a predicted traffic volume from the one measuring period to the next measuring period is increased/decreased.

6. Method in accordance with one of the claims 1 to 5, **characterized in that**,

    - Media Gateways (MG) are provided as an interface between the packet data network (PN) and a connection-oriented telecommunications network that is connected to said data network,
    - a Media Gateway Controller (MGC) is provided for controlling the Media Gateways (MG) and
    - the predicted traffic volumes are determined for each traffic direction by the Media Gateway Controller (MGC) and are distributed to the Media Gateways (MG) in order to reserve the resources in the packet data network.

7. Method in accordance with claim 6, **characterized in that** trunk group-oriented call statistics or a traffic matrix VM managed in a Media Gateway Controller (MGC) or in a Call Feature Server are used in order to determine the data throughput.

8. Media Gateway Controller (MGC) for executing the method in accordance with claim 1, **characterized in that** it includes the means for calculating predicted traffic volumes for each traffic direction as well as the means for distributing these predicted traffic volumes to the Media Gateways (MG).

9. Media Gateway (MG) for executing the method in accordance with claim 1, **characterized in that** it includes the means for receiving a predicted traffic volume as well as the means for reserving the resources in the packet data network (PN) corresponding to a predicted traffic volume.

**Revendications**

1. Procédé de régulation de charge dans un réseau (PN) de paquets sur une interface entre le réseau (PN) de données par paquets et un réseau de télécommunication qui y est relié et qui est orienté connexion,en déterminant périodiquement une quantité de trafic de données d'un type, qui passe par le réseau de données, **caractérisé ,**

   - **en ce que** l'on calcule au moyen de données de mesure un pronostique de la quantité de trafic pour la période suivante
   - **en ce que** l'on effectue pour la période suivante une réservation de ressources dans le réseau (PN) de données de paquets correspondant au pronostic de quantité de trafic et,
   - **en ce que** l'on détermine le pronostic de la quantité de trafic au moyen de la formule :

$$\text{VMP(t+T)} = \text{VM(t)} \ .\ddot{U}\text{F} + (\text{VM(t)} -\text{VM(t-T)}).\text{TF}$$

   dans laquelle t est un temps, T est une période de mesure, VM(t) est une quantité de trafic en cours à l'instant t, VM (t-T) est une quantité de trafic précédente à l'instant t-T, VMP (t+T) est un pronostic de quantité de trafic pour l'instant t+T, ÜF est un facteur de suréservation et TF est facteur de tendance.

2. Procédé suivant la revendication 1, **caractérisé en ce que** lorsque la quantité de trafic augmente/diminue pendant une période de mesure, on augmente/diminue la réservation de ressources du réseau (PN) de données par paquets par sens du trafic pour le période de mesure suivante.

3. Procédé suivant la revendication 1 à 2, **caractérisé en ce que** la quantité de trafic correspond à la quantité de données transmises pendant une période de mesure.

4. Procédé suivant l'une des revendications 1 à 3, **caractérisé en ce que** l'on tient compte, pour la détermination du pronostic de la quantité de trafic, de la mesure dans laquelle une qualité exigée de transmission peut être satisfaite dans une période par le réseau (PN) de données par paquets.

5. Procédé suivant la revendication 4, **caractérisé en ce que**, si la capacité de transmission de réseau (PN) de données par paquets augmente/ diminue, on augmente/diminue le pronostic d'une quantité de trafic d'une période de mesure à la suivante.

6. Procédé suivant l'une des revendications 1 à 5, **caractérisé en ce que**,

   - l'on prévoit comme interface entre le réseau (PN) de données par paquets et le réseau de télécommunication qui y est relié et qui est orienté connexion des média gateways (MG),
   - **en ce qu'**il est prévu pour la régulation des média gateways (MG), un média gateways controller (MGC) et
   - **en ce que** l'on détermine les pronostics de quantités de la circulation pour chaque sens de la circulation par le média gateways controller (MG) et on les répartit sur des média gateways (MG) pour la réservation de ressources dans le réseau de données par paquets.

7. Procédé suivant la revendication 6, **caractérisé en ce que** l'on tire partie pour la détermination du débit de données d'une statistique d'appel orientée faisceau ou d'une matrice VM de trafic qui passe dans un call feature server.

8. Média gateway controller (MGC) pour la mise en oeuvre du procédé selon la revendication 1, **caractérisé en ce qu'**il comprend des moyens de calculs de pronostic de quantités de la circulation pour respectivement un sens de la circulation, ainsi que des moyens de répartition de ces quantités de la circulation sur des média gateway (MG).

9. Média gateway (MG) pour la mise en oeuvre du procédé selon la revendication 1, **caractérisé en ce qu'**il comprend des moyens de réception d'un pronostic d'une quantité de la circulation, ainsi que des moyens de réservation de ressources du réseau (PN) de données par paquets correspondant au pronostic de la quantité de la circulation.